# EUROPÄISCHE PATENTSCHRIFT

(11) **EP 1 082 867 B1**
(45) Veröffentlichungstag und Bekanntmachung des Hinweises auf die Patenterteilung: **14.08.2002**
(21) Anmeldenummer: 99936271.8
(22) Anmeldetag: 18.05.1999
(51) Int. Cl.: H04Q 7/36

(54) **VERFAHREN ZUR ZUORDNUNG ZUMINDEST EINES WERTES ZUMINDEST EINES ÜBERTRAGUNGSPARAMETERS ZU ZELLEN EINER M ZELLEN AUFWEISENDEN KOMMUNIKATIONSANORDNUNG**
METHOD FOR ALLOCATING AT LEAST ONE VALUE OF AT LEAST ONE TRANSMISSION PARAMETER TO CELLS OF A COMMUNICATION SYSTEM CONTAINING M CELLS
PROCEDE POUR AFFECTER AU MOINS UNE VALEUR D'AU MOINS UN PARAMETRE DE TRANSMISSION A DES CELLULES D'UN SYSTEME DE COMMUNICATION PRESENTANT M CELLULES

(30) Priorität: 29.05.1998 DE 19824140
(43) Veröffentlichungstag der Anmeldung: 14.03.2001
(73) Patentinhaber: SIEMENS AKTIENGESELLSCHAFT, 80333 München (DE)
(72) Erfinder: BALL, Carsten, D-76764 Rheinzabern (DE); DEINZER, Arnulf, D-81476 München (DE)
(86) Internationale Anmeldenummer: DE9901491
(87) Internationale Veröffentlichungsnummer: WO9963777

(56) Entgegenhaltungen:
- EP-A- 0 565 499
- WO-A-95/26598
- US-A- 5 455 821

## Beschreibung

Bei drahtlosen, auf Funkkanälen basierenden Kommunikationsnetzen, insbesondere bei Punkt-zu-Multipunkt Funk-Zubringernetzen - auch als "radio in the local loop" bzw. "RLL" bezeichnet - sind mehrere Netzabschlußeinheiten jeweils über einen oder mehrere Funkkanäle an eine Basisstation - auch als "radio base station" bzw. "RBS" bezeichnet - angeschlossen. Im telcom Report Nr. 18 (1995), Heft 1 "Drahtlos zum Freizeichen", Seite 36, 37 ist beispielsweise ein drahtloses Zubringernetz für die drahtlose Sprach- und Datenkommunikation beschrieben. Das beschriebene Kommunikationssystem stellt einen RLL-Teilnehmeranschluß in Kombination mit moderner Breitband-Infrastruktur - z.B. "fiber to the curb" - dar, welches in kurzer Zeit und ohne großen Aufwand anstelle der Verlegung von drahtgebundenen Anschlußleitungen realisierbar ist. Die den einzelnen Teilnehmern zugeordneten Netzabschlußeinheiten RNT - Radio Network Termination - sind über das Übertragungsmedium "Funkkanal" und die Basisstation RBS an ein übergeordnetes Kommunikationsnetz, beispielsweise an das ISDNorientierte Festnetz, angeschlossen.

Durch die zunehmende Verbreitung von Multimedia-Anwendungen müssen hochbitratige Datenströme schnell und sicher über Kommunikationsnetze, insbesondere über drahtlose Kommunikationsnetze bzw. über Mobilfunksysteme übertragen werden. Dafür sind insbesondere seitens der Luftschnittstelle technisch und wirtschaftlich nur aufwendig zu realisierende Verfahren für die Steuerung von Zugriffen auf das Übertragungsmedium, sowie aufwendige Verfahren für Multiplexen, Codierung und Modulation der Signale erforderlich. Beispielsweise werden für die Realisierung der zukünftigen dritten Generation der Mobilkommunikation die aktuell noch getrennten Systeme des zellularen Mobilfunks und der Schnurlostelefone sowie des Funkrufs zur Sprach- und/oder Datenübertragung in einem universellen Mobilkommunikationssystem - auch als UMTS (Universal Mobile Telecommunication System) bezeichnet - zusammengefaßt, wodurch ein erweitertes Dienstespektrum und einheitliche Endgeräte ermöglicht werden. Dazu wird ähnlich dem zellularen Mobilfunk ein flächendeckend zu versorgendes Gebiet - beispielsweise Europa - in sich teilweise überlappende Funkzellen unterschiedlicher Größe aufgeteilt - z.B. in Makro-, Micro- und Pico-Zellen -, um mit dem zur Verfügung stehenden Frequenzspektrum den je nach Teilgebiet - z.B. Innenstadt oder ländliche Region - stark unterschiedlichen Bedarf an vermittlungstechnischen und übertragungstechnischen Ressourcen abzudecken. Jeder Funkzelle wird eine Basisstation zugeordnet, welche über das drahtlose Übertragungsmedium "Funkkanal" mit mehreren dezentralen Kommunikationseinrichtungen wie Mobilstationen oder drahtlosen Netzabschlußeinheiten verbunden ist. Um eine bidirektionale Informationsübermittlung zwischen einer in einer Funkzelle einer drahtlosen Kommunikationsanordnung angeordneten dezentralen Kommunikationseinrichtung und der Basisstation zu ermöglichen, wird jeweils eine Duplex-Verbindung zwischen dezentraler Kommunikationseinrichtung und zentraler Basissatation aufgebaut, wobei das FDD-Verfahren - "Frequency Division Duplex" - oder das TDD-Verfahren - "Time Division Duplex" - als aktuelle Duplex-Verfahren zur bidirektionalen Informationsübermittlung eingesetzt werden. Um den Zugriff der in einer drahtlosen Kommunikationsanordnung angeordneten zentralen und dezentralen Kommunikationseinrichtungen auf das gemeinsam genutzte Übertragungsmedium "Funkkanal" zu steuern, werden Vielfach-Zugriffsverfahren - Multiple Access - wie beispielsweise FDMA - Frequency Division Multiple Access -, TDMA - Time Division Multiple Access und CDMA - Code Division Multiple Access - eingesetzt. Des Weiteren sind auch Kombinationen der genannten Vielfach-Zugriffsverfahren - auch als hybride Verfahren bezeichnet - wie beispielsweise das TD/CDMA-Zugriffsverfahren für den Einsatz in zukünftigen drahtlosen Kommunikationsanordnungen bekannt.

Im Gegensatz zum FDMA- und TDMA-Vielfach-Zugriffsverfahren wird beim CDMA-Vielfach-Zugriffsverfahren der selbe Frequenzbereich von allen in einer Funkzelle bzw. Zelle der drahtlosen Kommunikationsanordnung angeordneten Kommunikationseinrichtungen bzw. Teilnehmern gleichzeitig genutzt. Um die von den einzelnen Kommunikationseinrichtungen ausgesendeten Teilnehmersignale empfängerseitig separierbar zu machen, werden diese spektral gespreizt, d.h. in einem breitbandigen Spektralbereich transformiert. Ein Verfahren zur spektralen Spreizung stellt beispielsweise das in der aktuellen Mobilkommunikation häufig eingesetzte DS-Prinzip "Direct Sequence" dar, bei welchem jedes schmalbandige Teilnehmersignal geringer Bitrate zur spektralen Spreizung mit einer dem Teilnehmer individuell zugeordneten breitbandigen Spreizfunktion, welche auch als CDMA-Code bezeichnet wird, multipliziert wird. Das daraus resultierende breitbandige Signal enthält das schmalbandige Nutzsignal bzw. Teilnehmersignal sowie eine individuelle Feinstruktur, nach welcher das Nutzsignal bzw. Teilnehmersignal von den anderen überlagerten, breitbandigen Sendesignalen empfängerseitig separierbar ist.

Bei der Netzplanung oder Netzerweiterung codeselektiver Funksysteme, d.h. bei der Realisierung drahtloser, zellularer Kommunikationsnetze mit eingesetztem CDMA-Vielfach-Zugriffsverfahren ist jeder eine Funkzelle realisierenden Basisstation bzw. zentralen Kommunikationseinrichtung ein Basisstation-spezifischer, eine Spreizfunktion repräsentierender CDMA-Code zuzuordnen. Ein einer Basisstation zugeordneter CDMA-Code wird auch als CDMA-Basiscode oder CDMA-Codesamen bezeichnet, da aus diesen jeweils diejenigen zellenspezifischen CDMA-Codes abgeleitet werden, welche den in der jeweiligen Funkzelle angeordneten, dezentralen Kommunikationseinrichtungen beim Verbindungsaufbau zur Realisierung von Funkkanälen zugeordnet werden. Die CDMA-Basiscodes als auch die von den CDMA-Basiscodes abgeleiteten und innerhalb einer Funkzelle für das CDMA-Vielfachzugriffsverfahren eingesetzten CDMA-Codes können sowohl orthogonale als auch nichtorthogonale CDMA-Codes repräsentieren, wobei orthogonale CDMA-Codes unabhängig voneinander sind - d.h. der Wert der Kreuzkorrelation zweier orthogonaler CDMA-Codes weist den Wert 0 auf -; nichtorthogonale CDMA-Codes weisen eine vom Wert 0 leicht abweichende Kreuzkorrelation auf.

Bei der Realisierung oder der Erweiterung von drahtlosen, zellularen Kommunikationsnetzen basierend auf einem CDMA-Vielfachzugriffsverfahren müssen die nur im beschränkten Umfang zur Verfügung stehenden CDMA-Basiscodes auf die in den Funkzellen angeordneten Basisstationen verteilt bzw. den einzelnen Funkzellen der drahtlosen Kommunikationseinrichtung zugeordnet werden.

Aus der Europäischen Patentschrift 0 681 776 ist beispielsweise ein Verfahren zur Zuweisung von jeweils Werte eines Übertragungsparameters repräsentierenden Frequenzen zu Basisstationen eines Mobilfunknetzes beschrieben, bei dem von Eingangsinformationen ausgegangen wird, die mindestens die Anzahl der für jeweils eine Basisstation erforderlichen Frequenzen, die im Mobilfunknetz zulässigen Frequenzen und Informationen zu möglichen Störwirkungen zwischen den Basisstationen im Fall zugeordneter, gleicher und/oder benachbarter Frequenzen umfassen. Im Rahmen mehrfach zu durchlaufender Frequenzzuweisungsdurchläufe wird jeweils eine Basisstation aus der Menge derjenigen Basisstationen ausgewählt, der noch nicht alle vorgesehenen Frequenzen zugewiesen worden sind, wobei die Basisstation nach einem ersten Basisstations-Auswahlkriterium und erforderlichenfalls weiterer Basisstation-Auswahlkriterien ausgewählt wird. In Abhängigkeit von der ausgewählten Basisstation wird eine Frequenz nach einem ersten Frequenz-Auswahlkriterium und erforderlichenfalls weiteren Frequenz-Auswahlkriterien ausgewählt und anschließend der ausgewählten Basisstation zugewiesen. Die Frequenzzuweisungsdurchläufe werden solange wiederholt, bis allen Basisstationen unter Berücksichtigung aller Nebenbedingungen wie Basisstation- und Frequenz-Auswahlkriterien die erforderliche Anzahl von Frequenzen zugeordnet sind.

Die EP 0 565 499 A1 beschreibt ein Verfahren zur Zuordnung von Funkkanälen zu Basisstationen in einem zelluraren Mobilfunksystem. Die Zuordnung der Funkkanäle wird derart gewählt, daß für eine bestimmte Verkehrslast die Interferenzen zwischen den einzelnen Funkkanälen minimiert werden. Jedoch bezieht sich die technische Lehre nicht auf ein Mobilfunksystem gemäß einem CDMA-Vielfachzugriffsverfahren.

Aus der US 5,455,821 ist ein Verfahren zur Zuordnung von Funkkanälen in einem Kommunikationssystem bekannt, wobei das Kommunikationssystem auf einem TDMA- und/oder einem FDMA-Teilnehmerseparierungsverfahren basiert. Die Anwendung des Verfahrens auf Kommunikationssysteme, welche eine Separierung der Teilnehmer mithilfe verschiedener Codes vornehmen, wird nicht offenbart.

Der Erfindung liegt daher die Aufgabe zugrunde, die Realisierung bzw. Planung von drahtlosen Kommunikationsnetzen, insbesondere von zellularen, auf einem CDMA-Vielfach-Zugriffsverfahren basierenden Kommunikationsnetzen sowie die Realisierung von Erweiterungen derartiger Kommunikationsnetze zu verbessern. Die Aufgabe wird durch die Merkmale des Patentanspruchs 1 gelöst.

Der wesentliche Aspekt des erfindungsgemäßen Verfahrens zur Zuordnung zumindest eines im Rahmen eines CDMA-Vielfach-Zugriffsverfahrens nutzbaren CDMA-Codes zu Zellen einer m-Zellen aufweisenden Kommunikationsanordnung, wobei n unterschiedliche CDMA-Codes verfügbar sind, besteht darin, daß benachbarte Zellen erfaßt werden und jeder Zelle jeweils zufällig zumindest ein CDMA-Code zugeordnet wird. Für jeweils benachbarte Zellen wird jeweils ein die gegenseitige übertragungstechnische Beeinflussung der aktuell zugeordneten CDMA-Codes repräsentierender Störwert ermittelt und anschließend ein die Summe aller Störwerte repräsentierender Gesamtstörwert ermittelt. Die Anzahl der unterschiedlichen CDMA-Codes und deren Zuordnung zu den jeweiligen Zellen wird solange variiert, bis ein minimaler Gesamtstörwert erreicht ist.

Der wesentliche Vorteil des erfindungsgemäßen Verfahrens besteht darin, daß mit minimalem wirtschaftlichen und technischen Aufwand eine sehr schnelle Zuordnung von CDMA-Codes zu Zellen einer Kommunikationsanordnung erreicht wird, wobei vorteilhaft keine Nebenbedingungen bzw. Auswahlkriterien vorab zu bestimmen und auszuwerten sind. Vorteilhaft sind keine planerischen Überlegungen und eine anschließende Weiterverarbeitung der dokumentarisch festgehaltenen Überlegungen erforderlich, so daß mit einfachen Mitteln eine zeitoptimierte und kostengünstige Planung von Kommunikationsanordnungen, insbesondere drahtloser, zellularer Kommunikationsnetze erreicht wird. Weiterhin wird durch das erfindungsgemäße Verfahren die Wahrscheinlichkeit fehlerhafter Zuweisungen von CDMA-Codes zu den Zellen der Kommunikationsanordnung minimiert, wodurch vorteilhaft die Funktionalität und Betriebssicherheit der zu realisierenden Kommunikationsanordnung verbessert wird. Durch das erfindungsgemäße Verfahren können auch mehrere CDMA-Codes zu den Zellen der Kommunikationsanordnung zugeordnet werden.

Ein zusätzlicher Vorteil des erfindungsgemäßen Verfahrens besteht darin, daß zusätzlich für jeweils nicht benachbarte Zellen jeweils ein die gegenseitige übertragungstechnische Beeinflussung der aktuell zugeordneten CDMA-Codes repräsentierender weiterer Störwert ermittelt wird und anschließend der die Summe aller Störwerte repräsentierende Gesamtstörwert aus der gewichtbaren Summe aller Störwert und der weiteren Störwerte gebildet wird - Anspruch 2. Bei dieser vorteilhaften Ausgestaltung werden bei der Zuordnung von CDMA-Codes zu den m-Zellen der Kommunikationsanordnung zusätzlich auch die gegenseitige übertragungstechnische Beeinflussung bzw. Störung von nicht benachbarten Zellen berücksichtigt, wodurch die Zuordnung von CDMA-Codes zu den m-Zellen der Kommunikationsanordnung weiter verbessert bzw. optimiert und somit die Störanfälligkeit der gesamten Kommunikationsanordnung weiter minimiert wird.

Gemäß einer vorteilhaften Weiterbildung des erfindungsgemäßen Verfahrens erfolgt bei Hinzufügen zumindest einer weiteren Zelle zu den m-Zellen der Kommunikationsanordnung die Zuordnung zumindest eines weiteren CDMA-Codes derart, daß die den m-Zellen bereits zugeordneten CDMA-Codes zugeordnet bleiben. Die Anzahl der insgesamt den m-Zellen und der zumindest einen hinzugefügten Zelle zugeordneten, unterschiedlichen CDMA-Codes und die Zuordnung zumindest eines CDMA-Codes zu der zumindest einen hinzugefügten Zelle wird solange variiert, bis ein minimaler Gesamtstörwert erreicht wird - Anspruch 3. Durch diese vorteilhafte Weiterbildung ist das erfindungsgemäße Verfahren sowohl bei der Planung eines Netzaufbaus - d.h. einer Erstzuweisung eines CDMA-Codes zu den m-Zellen der Kommunikationsanordnung - als auch bei einer geplanten Netzerweiterung - d.h. bei einem Hinzufügen zumindest einer weiteren Zelle zu den bereits bestehenden m-Zellen der Kommunikationsanordnung - vorteilhaft einsetzbar.

Vorteilhaft wird die Anzahl der CDMA-Codes und deren Zuordnung zu den jeweiligen Zellen mit Hilfe einer iterativen Optimierung variiert, wobei die Summe aller Störwerte eine ein gewichtbares Optimierungsziel repräsentierende Funktionskomponente einer Zielfunktion darstellt. Im Rahmen der iterativen Optimierung wird das gewichtbare Optimierungsziel der Zielfunktion derart optimiert, daß die Summe aller Störwerte einen minimalen Gesamtstörwert und die Zielfunktion einen optimalen oder minimalen Funktionswert erreicht - Anspruch 4. Bei der iterativen Optimierung können vorteilhaft bekannte und ausgereifte Optimierungsstrategien für die Zuordnung von CDMA-Codes zu den m-Zellen der Kommunikationsanordnung eingesetzt werden. Beispiel für iterative Optimierungen realisierende Optimierungsstrategien sind "Simulated Annealing", genetische Algorithmen oder auch neuronale Netze (Hopfield-Netze) - Anspruch 12. Iterative Optimierungen werden beispielsweise standardmäßig bei kombinatorischen Optimierungsproblemen im Layout-Entwurf integrierter Schaltungen angewendet und werden durch das erfindungsgemäße Verfahren vorteilhaft bei der Planung und Erweiterung von Kommunikationsnetzen eingesetzt. Derartige Algorithmen zur Realisierung von Optimierungsstrategien sind beispielsweise in den folgenden Druckschriften beschrieben:
- "Adaption in natural and artificial systems", J.H. Holland, second printing, MIT-Press, Cambridge, 1992,
- "Genetic algorithms in search, optimization and machine learning", D.E. Goldberg, Addison Wessley Publishing Company, Massachusetts, 1989.
- "Optimization by simulated annealing", S. Kirkpatrick, C.D. Gelatt, M.P. Vecchi, Science, Vol. 220, No. 4598, 1983.

Gemäß einer vorteilhaften Weiterbildung weist die Zielfunktion eine weitere, ein gewichtbares Optimierungsziel repräsentierende Funktionskomponente auf, durch welche die Anzahl von allen Zellen aktuell zugeordneten, unterschiedlichen CDMA-Codes erfaßt wird. Weiterhin kann die Zielfunktion eine weitere, ein gewichtbares Optimierungsziel repräsentierende Funktionskomponente aufweisen, durch welche die Anzahl von jeweils benachbarten Zellen aktuell zugeordneten, gleichen CDMA-Codes erfaßt wird. Anschließend werden im Rahmen der iterativen Optimierung die gewichtbaren Optimierungsziele derart gewichtet und die Zielfunktion derart optimiert, daß den Zellen eine minimale Anzahl unterschiedlicher CDMA-Codes zugeordnet werden und/oder benachbarte Zellen nach Möglichkeit keine gleichen CDMA-Codes aufweisen - Anspruch 5. Durch das Erweitern der Zielfunktion durch weitere, jeweils ein gewichtbares Optimierungsziel repräsentierende Funktionskomponenete wird die Zuordnung von CDMA-Codes zu den m-Zellen der Kommunikationsanordnung verbessert bzw. wird eine Verfeinerung der Optimierungsstrategie erreicht, da vorteilhaft weitere übertragungstechnische Nebenbedingungen bei der Planung und Erweiterung von Kommunikationsnetzen berücksichtigt werden können. Durch eine geeignete Gewichtung der einzelnen Funktionskomponenten der Zielfunktion erfolgt im Rahmen der iterativen Optimierung die Zuordnung von Werten des zumindest einen Parameter vorteilhaft in der Art und Weise, daß die Anzahl der allen Zellen aktuell zugeordneten, unterschiedlichen CDMA-Codes minimal ist und gleichzeitig benachbarten Zellen keine gleichen CDMA-Codes zugeordnet werden. Dadurch wird eine optimale Zuordnung von CDMA-Codes zu den m-Zellen der Kommunikationsanordnung, d.h. eine minimale gegenseitige Störung von benachbarten CDMA-Codes und somit eine minimale Störanfälligkeit bei der Nutzung der Kommunikationsanordnung erreicht.

Zumindest ein CDMA-Code wird beispielsweise einer in einer Zelle angeordneten, zentralen Kommunikationseinrichtung zugeordnet - Anspruch 6. Die zentrale Kommunikationseinrichtung kann beispielsweise durch eine in einer Funkzelle eines Mobilfunk-Kommunikationsnetzes angeordnete Basisstation realisiert sein.

Der jeweils einer Zelle zuordenbare CDMA-Code kann beispielsweise einen im Rahmen eines CDMA-Vielfach-Zugriffsverfahrens nutzbaren, orthogonalen oder nicht orthogonalen CDMA-Code - Anspruch 7 - repräsentieren. Beispielsweise ist das erfindungsgemäße Verfahren bei der Planung bzw. Konzipierung von Mobil-Kommunikationssystemen, insbesondere von Mobil-Kommunikationssystemen gemäß dem UMTS-Standard oder von drahtlosen Teilnehmerzugangsnetzen basierend auf einem CDMA-Vielfachzugriffsverfahren einsetzbar, wobei auf sehr einfache und kostengünstige Weise orthogonale oder nicht orthogonale CDMA-Codes bzw. CDMA-Basiscodes zu Basisstationen zuordenbar sind.

Weiterhin wird für die Ermittlung der jeweils die gegenseitige übertragungstechnische Beeinflussung der aktuell zugeordneten CDMA-Codes repräsentierenden Störwerte jeweils die Kreuzkorrelation der aktuell zugeordneten CDMA-Codes ermittelt, wobei der Gesamtstörwert die Summe aller ermittelten Kreuzkorrelationen repräsentiert - Anspruch 9. Durch die Berechnung der Kreuzkorrelation benachbarter CDMA-Codes wird auf sehr einfache Weise die jeweilige übertragungstechnische Beeinflussung der aktuell zugeordneten CDMA-Codes ermittelt, wodurch die Realisierung des erfindungsgemäßen Verfahrens weiter vereinfacht wird.

Gemäß einer vorteilhaften Ausgestaltung, werden den zentralen Kommunikationseinheiten orthogonale und/oder pseudo-random CDMA-Codes zugeordnet, wobei aus den zugeordneten CDMA-Codes weitere Kommunikationseinheit-spezifische Codes abgeleitet werden - Anspruch 13. Durch das Ableiten von Kommunikationseinheit-spezifische Codes aus den "optimal" zugeordneten CDMA-Codes bzw. CDMA-Basiscodes wird eine minimale, interzellulare Störung zwischen den Zellen der Kommunikationsanordnung erreicht.

Vorteilhaft wird die Zuordnung des zumindest einen Wertes des zumindest einen Übertragungsparameters programmtechnisch realisiert - Anspruch 15. Durch diese vorteilhafte Ausgestaltung wird eine automatische und zeitoptimierte Zuordnung von Werten des zumindest einen Übertragungsparameters ermöglicht, wobei die resultierenden Ergebnisse in einem allgemein lesbaren Datenformat speicherbar sind und somit durch weitere die Netzplanung unterstützende Computerprogramme weiterverarbeitet werden können.

Weitere vorteilhafte Ausgestaltungen des erfindungsgemäßen Verfahrens sind den weiteren Ansprüchen zu entnehmen.

Im folgenden wird das erfindungsgemäße Verfahren anhand mehrerer Zeichnungen genauer erläutert. Dabei zeigen:

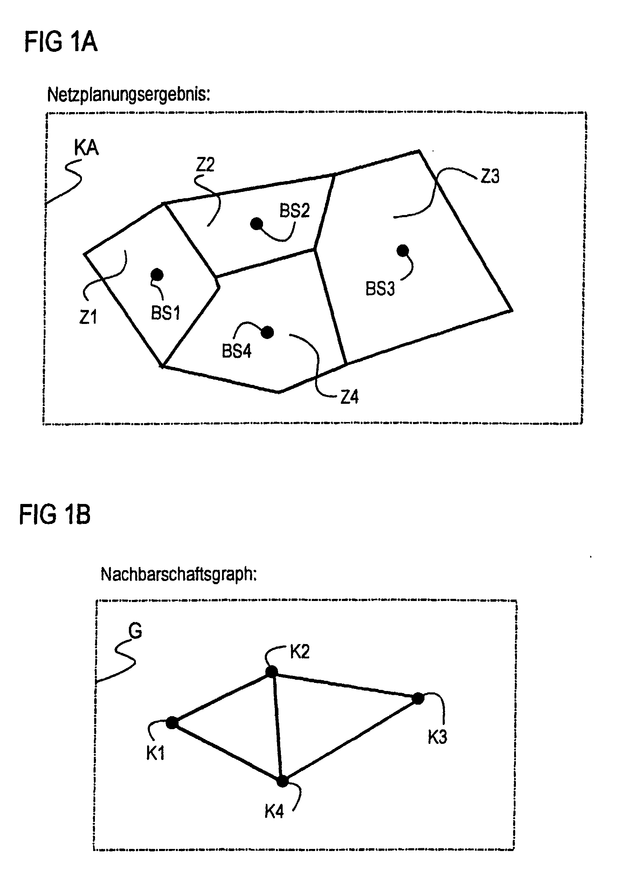

- FIG 1A und FIG 1B: eine ein Netzplanungsergebnis repräsentierende zellulare Anordnung einer drahtlosen Kommunikationsanordnung bzw. eines Kommunikationsnetzes in einem Versorgungsgebiet,

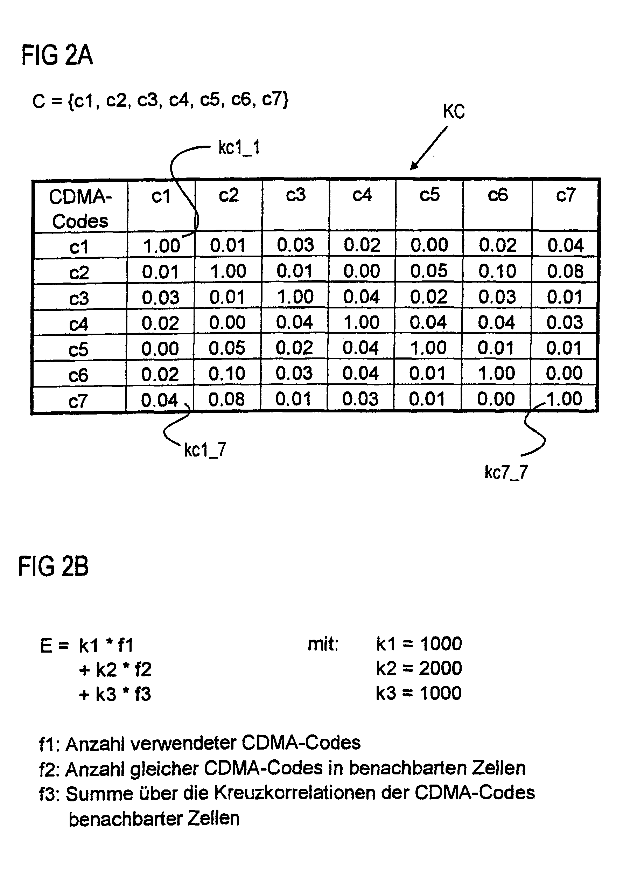

- FIG 2A und FIG 2B: eine Kreuzkorrelationsmatrix basierend auf nichtorthogonalen, den Zellen der drahtlosen Kommunikationsanordnung zuzuordnenden CDMA-Codes, sowie eine Zielfunktion, welche im Rahmen des erfindungsgemäßen Verfahrens derart optimiert wird, daß eine optimale Zuordnung, d.h. eine Zuordnung mit geringster übertragungstechnischer Beeinflussung der zur Verfügung stehenden CDMA-Codes zu den einzelnen Zellen der Kommunikationsanordnung erreicht wird,

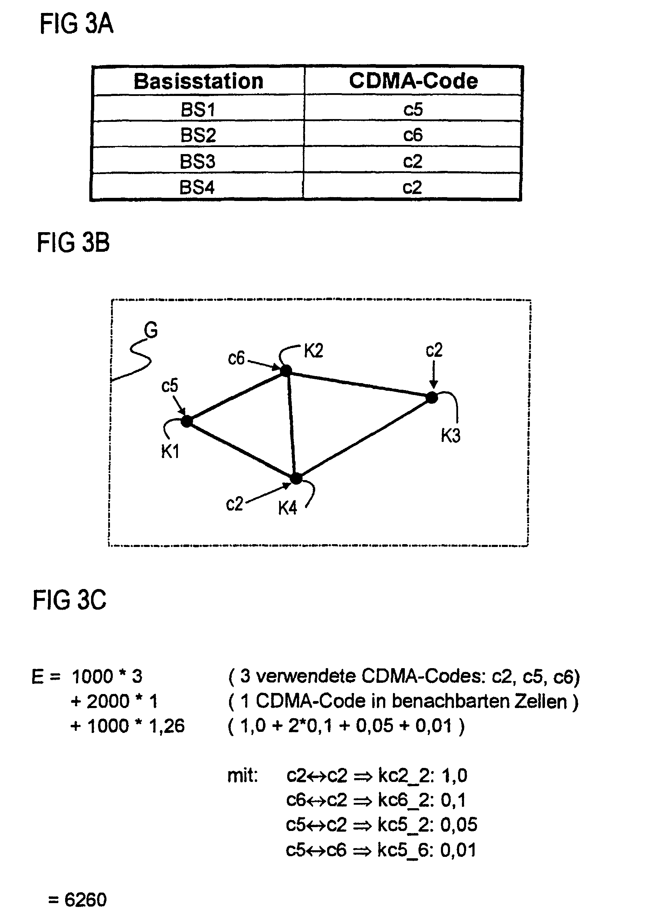

- FIG 3A bis FIG 3C: ein erstes Ergebnis einer im Rahmen des erfindungsgemäßen Verfahrens erfolgten initialen Erstzuweisung der zur Verfügung stehenden CDMA-Codes zu den Zellen der Kommunikationsanordnung sowie ein das Ergebnis der Zielfunktion repräsentierenden Startwert, basierend auf der initialen Erstzuweisung von CDMA-Codes, wobei zusätzlich die jeweils ein gewichtbares Optimierungsziel repräsentierenden Funktionskomponenten der Zielfunktion dargestellt sind,

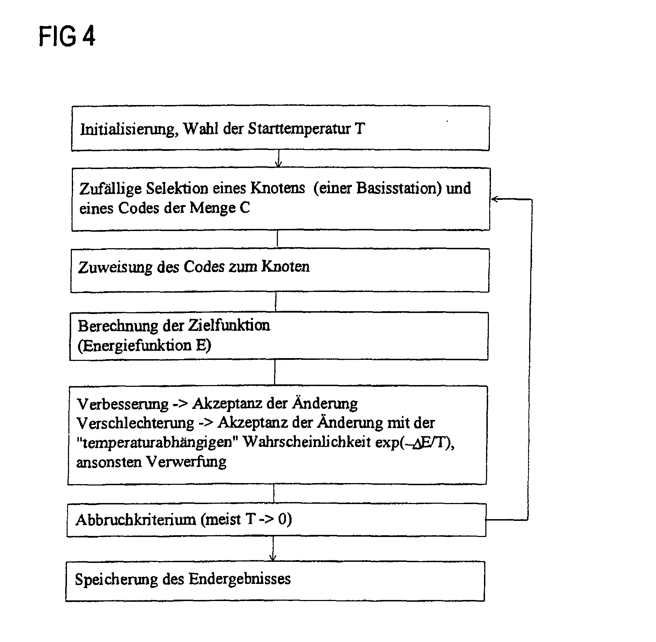

- FIG 4: einen prinzipiellen Ablauf eines kombinatorischen Optimierungsalgorhithmus - "Simulated Annealing" -, dessen innere Schleife iterativ wiederholt wird,

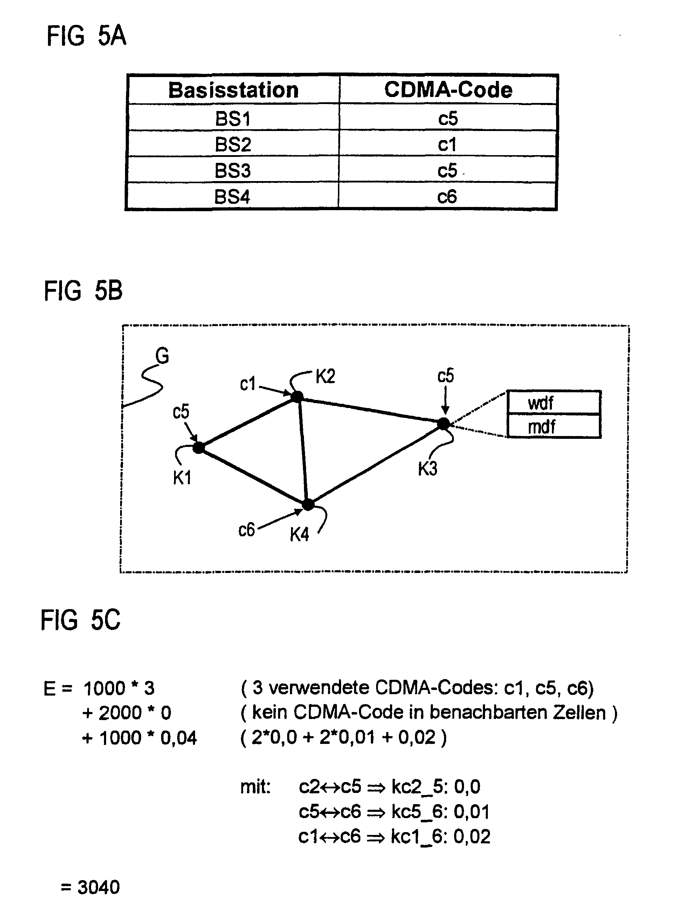

- FIG 5A bis FIG 5C: ein das Ergebnis des erfindungsgemäßen Verfahrens repräsentierendes, endgültiges Zuordnungsergebnis von CDMA-Codes zu den Zellen bzw. Basisstationen des Kommunikationsnetzes, sowie das Endergebnis der Zielfunktionen, basierend auf der endgültigen Zuordnung der CDMA-Codes zu den Zellen des Kommunikationsnetzes.

In FIG 1A ist eine in einem Versorgungsgebiet angeordnete Kommunikationsanordnung KA dargestellt, welche in diesem Ausführungsbeispiel ein drahtloses Kommunikationsnetz basierend auf einem CDMA-Vielfach-Zugriffsverfahren repräsentiert - z.B. ein Wireless Local Loop System "WLL" basierend auf einer CDMA-Technologie. Als Ergebnis einer bereits erfolgten und nicht näher erläuterten Netzplanung, ist das drahtlose Kommunikationsnetz beispielsweise abhängig von den Geländeeigenschaften des Versorgungsgebietes in 4 Funkzellen bzw. Zellen Z1...4 unterteilt, wobei in diesem Ausführungsbeispiel in jeder Zelle Z1...4 eine zentrale Kommunikationseinrichtung bzw. Basisstation BS1...4 mit beispielsweise integrierten Rundstrahlern angeordnet ist. Die Abmessungen und die jeweilige Anordnung der einzelnen Zellen Z1...4 sowie die Plazierung einer Basisstation BS1...4 innerhalb einer Zelle Z1...4 ist durch das Ergebnis der bereits erfolgten Netzplanung genau definiert und in FIG 1A dargestellt. Die Topologie des in FIG 1A dargestellten, drahtlosen Kommunikationsnetzes KN bzw. die Anordnung der einzelnen Zellen Z1...4 des Kommunikationsnetzes KN wird in einen in FIG 1B dargestellten Nachbarschaftsgraphen G abgebildet, wobei jede Basisstation BS1...4 genau einem Knoten K1...4 des Nachbarschaftsgraphen G entspricht. Jede jeweils zwei Knoten K1...4 verbindende Kante des Nachbarschaftsgraphen G repräsentiert jeweils zwei benachbarte Zellen Z1...4 bzw. Basisstationen BS1...4, welche zumindest teilweise einen gemeinsamen Grenzverlauf aufweisen. Gemäß FIG 1B ist beispielsweise der erste und der vierte Knoten K1,4 durch eine Kante verbunden wodurch die erste und die vierte Basisstation BS1,4 als benachbart gekennzeichnet sind. In FIG 1A ist entsprechend der gemeinsame Grenzverlauf zwischen der ersten und der vierten Zelle Z1,4 ersichtlich. Des Weiteren ist nach FIG 1B die erste und zweite Basisstation BS1,2 sowie die zweite und vierte Basisstation BS2,4 sowie die zweite und dritte Basisstation BS2,3 als benachbart gekennzeichnet. Zwischen dem ersten und dem dritten Knoten K1,3 ist keine Kante im Nachbarschaftgraphen G angeordnet, da die erste und dritte Zelle Z1,3 des drahtlosen Kommunikationsnetzes KA keinen gemeinsamen Grenzverlauf aufweisen - vgl. FIG 1A.

Um einen optimalen, d.h. einen störungsfreien Betrieb des nach einem CDMA-Vielfach-Zugriffsverfahren konzipierten Kommunikationsnetzes KA zu ermöglichen, muß jeder innerhalb einer Zelle Z1...4 des CDMA-Kommunikationsnetz KA angeordneten Basisstation BS1...4 ein oder mehrere Basisstation-spezifische CDMA-Codes bzw. CDMA-Basiscodes c1...7 - siehe FIG 2A - zugeordnet werden, wobei eine gegenseitige Beeinflussung bzw. Störung von benachbarten Zellen Z1...4 zugeordneten CDMA-Codes c1...7 möglichst zu vermeiden bzw. zu minimieren ist. Im folgenden wird beispielhaft die Zuordnung genau eines CDMA-Codes c1...7 zu einer Basisstation BS1...4 beschrieben. Die Zuordnung von CDMA-Codes c1...7 zu den Zellen Z1...4 des CDMA-Kommunikationsnetzes KA muß in der Art und Weise erfolgen, daß der die gegenseitige Störung von CDMA-Codes c1...7 repräsentierende Wert interzellularen Rauschens minimal ist. Für die Konfiguration des in FIG 1A dargestellten CDMA-Kommunikationsnetzes KN stehen in diesem Ausführungsbeispiel 7 globale, nichtorthogonale CDMA-Codes C1...7 zur Verfügung, welche zumindest teilweise im Rahmen einer initialen Codezuweisung, d.h. bei einer den Netzaufbau repräsentierenden Erstzuweisung von CDMA-Codes c1...7 optimal auf die im CDMA-Kommunikationsnetz KA angeordneten Basisstationen BS1...4 verteilt werden sollen.

In FIG 2A ist die zur Hauptdiagonalen symmetrische Kreuzkorrelationsmatrix KC der in diesem Ausführungsbeispiel zuzuordnenden CDMA-Codes c1...7 dargestellt, wobei jeder in der Kreuzkorrelationsmatrix KC dargestellte Kreuzkorrelationswert kc1_1...kc7_7 jeweils die gegenseitige Beeinflussung bzw. Abhängigkeit oder Störung zwischen zwei CDMA-Codes c1...7 repräsentiert. Die an der Hauptdiagonalen der Kreuzkorrelationsmatrix KC angeordneten Werte kc1_1, kc2_2,...,kc7_7 weisen jeweils den Wert 1 auf, da jeweils identische CDMA-Codes c1...7 eine maximale Abhängigkeit bzw. Korrelation aufweisen. Da in diesem Ausführungsbeispiel sowohl orthogonale als auch nichtorthogonale CDMA-Codes c1...7 den einzelnen Zellen Z1...4 des CDMA-Kommunikationsnetzes KA zuzuordnen sind, weisen zum Teil auch die nicht an der Hauptdiagonalen der Kreuzkorrelationsmatrix KC angeordneten Korrelationswerte einen von 0 abweichenden Wert auf. Beispielsweise weisen nach FIG 2A der erste und der fünfte CDMA-Code c1,5 keine Abhängigkeiten auf - d.h. der erste und fünfte CDMA-Code c1,5 sind zueinander orthogonal -, folglich weist der entsprechende Wert kc1_5 in der Kreuzkorrelationsmatrix KC den Wert 0 auf.

Erfindungsgemäß erfolgt die Zuordnung der zur Verfügung stehenden CDMA-Codes c1...7 zu den jeweiligen Zellen Z1...4 des CDMA-Kommunikationsnetzes KA mit Hilfe einer zu optimierenden Zielfunktion E, welche in FIG 2B dargestellt ist. In diesem Ausführungsbeispiel weist die Zielfunktion E drei jeweils ein gewichtbares Optimierungsziel repräsentierende Funktionskomponenten f1...3 auf, welche im Rahmen des erfindungsgemäßen Verfahrens mit Hilfe eines kombinatorischen Optimierungsalgorithmus jeweils iterativ verbessert werden und somit die Zielfunktion E insgesamt optimiert wird. Mit der ersten mit einem ersten Gewichtungsfaktor k1 gewichteten Funktionskomponente f1 wird die Anzahl der bei einem Zuordnungsschritt den Zellen Z1...4 zugeordneten, unterschiedlichen CDMA-Codes c1...7 erfaßt. Des Weiteren wird durch eine mit einem zweiten Gewichtungsfaktor k2 gewichteten Funktionskomponente f2 der Zielfunktion E die Anzahl gleicher, zugeordneter CDMA-Codes c1...7 in benachbarten Zellen Z1...4 bestimmt sowie durch eine mit einem dritten Gewichtungsfaktor k3 gewichteten Funktionskomponente f3 der Zielfunktion E die Summe aus denjenigen Kreuzkorrelationswerten c1_1...c7_7 von zugeordneten CDMA-Codes c1...7 gebildet, welche in benachbarten Zellen Z1...4 des CDMA-Kommunikationsnetzes KA angeordnet sind. Nach FIG 2B weist der erste Gewichtungsfaktor k1 den Wert k1 = 1000, der zweite Gewichtungsfaktor k2 den Wert k2 = 2000 sowie der dritte Gewichtungsfaktor k3 den Wert k3 = 1000 auf.

Gemäß dem erfindungsgemäßen Verfahren erfolgt beim als initialen Zuordnung bezeichneten ersten Zuordnungsschritt eine zufällige Zuordnung der zur Verfügung stehenden CDMA-Codes c1...7 zu den Zellen Z1...4 bzw. Basisstationen BS1...4 des CDMA-Kommunikationsnetzes KA. Die zufällige Zuordnung der CDMA-Codes c1...7 kann beispielsweise nach einem Würfelverfahren erfolgen. In FIG 3A und FIG 3B ist das Ergebnis der initialen Zuordnung von CDMA-Codes c1...7 zu den Basisstationen BS1...4 des Kommunikationsnetzes KA, bzw. zu den Knoten K1...4 des Nachbarschaftsgraphen G dargestellt. Nach dem ersten, initialen Zuordnungsschritt ist der ersten Basisstation BS1 der fünfte CDMA-Code c5, der zweiten Basisstation BS2 der sechste CDMA-Code c6, der dritten Basisstation BS3 der zweite CDMA-Code c2 und der vierten Basisstation BS4 ebenfalls der zweite CDMA-Code c2 zugeordnet. In FIG 3C ist selbsterläuternd das Ergebnis der Zielfunktion E, basierend auf der in FIG 3A dargestellten, initialen Zuordnung der CDMA-Codes c2,5,6 dargestellt, wobei das Zustandekommen der Ergebnisse der einzelnen Funktionskomponenten f1...3 genauer dargestellt ist. Der Wert der in FIG 3C dargestellten Zielfunktion E basierend auf der initialen Zuordnung stellt erfindungsgemäß den Startwert der Zielfunktion E=6260 dar, wobei die Zielfunktion und somit der Startwert im Rahmen des erfindungsgemäßen Verfahrens mit Hilfe des als "Simulated Annealing" bezeichneten, kombinatorischen Optimierungsalgorithmus iterativ verbessert bzw. optimiert wird. Ein prinzipieller Ablauf von "Simulated Annealing" ist selbsterläuternd in FIG 4 in Form eines Ablaufdiagrammes dargestellt.

Der kombinatorische Optimierungsalgorithmus wird so oft durchlaufen, d.h. die Anzahl und die Zuordnung der CDMA-Codes c1...7 derart variiert, bis die Zielfunktion E bzw. die jeweils ein gewichtbares Ziel repräsentierenden Funktionskomponenten f1...3 der Zielfunktion E optimiert sind und ein vorgebbares Abbruchkriterium erreicht ist. Bei Erreichen des Abbruchkriteriums - beispielsweise Erreichen eines minimalen Endwertes der Zielfunktion E - wird die aktuelle Zuordnung zumindest eines Teils der zur Verfügung stehenden CDMA-Codes c1...7 als Endergebnis gespeichert. In FIG 5A ist beispielhaft die mit Hilfe des kombinatorischen Optimierungsalgorithmus ermittelte, endgültige, d.h. "optimale" Zuordnung von CDMA-Codes c1...7 zu den Basisstationen BS1...4 in Form einer Tabelle dargestellt. Gemäß der optimalen Zuordnung ist der ersten Basisstation BS1 der fünfte CDMA-Code c5, der zweiten Basisstation BS2 der erste CDMA-Code c1, der dritten Basisstation BS3 der fünfte CDMA-Code c5 und der vierten Basisstation BS4 der sechste CDMA-Code c6 zugeordnet. Die endgültige Zuordnung der CDMA-Codes c1,5,6 ist ebenfalls im in FIG 5B abgebildeten Nachbarschaftsgraphen G dargestellt. In FIG 5C ist die entsprechende Zielfunktion E basierend auf der ermittelten, "optimalen" Zuordnung der CDMA-Codes c1,5,6 zu den Basisstationen BS1...4 dargestellt, wobei die Teilergebnisse der drei Funktionskomponenten f1...3 der Zielfunktion E genauer erläutert sind. Der in FIG 5C dargestellte und zugleich das Abbruchkriterium repräsentierende Endwert der Zielfunktion E = 3040 stellt hierbei den minimalsten, mit Hilfe des kombinatorischen Optimierungsalgorithmus ermittelten Wert dar - vergleiche FIG 3C.

Durch das beschriebene Verfahren wurde der in FIG 1A dargestellten Kommunikationsanordnung KA bzw. den im CDMA-Kommunikationsnetz angeordneten Basisstationen BS1...4 eine minimale Anzahl unterschiedlicher CDMA-Codes c1...7 zugeordnet - Zuordnung von nur drei unterschiedlichen CDMA-Codes c1,5,6 -, wobei benachbarte Basisstationen BS1...4 bzw. Funkzellen Z1...4 keine gleichen bzw. identische CDMA-Codes c1...7 aufweisen und gleichzeitig die Summe der Kreuzkorrelationen kc1_1...kc7_7 der benachbarten Basisstationen BS1...4 zugeordneten CDMA-Codes c1,5,6 einen minimalen Wert aufweist. Die das Endergebnis des erfindungsgemäßen Verfahrens repräsentierende Zuordnung von CDMA-Codes gemäß FIG 5A weist somit die geringsten gegenseitigen Störeinflüsse auf; diese Zuordnung gilt somit als optimal und wird in einem allgemein lesbaren Datenformat gespeichert. Vorteilhaft kann das gespeicherte Endergebnis durch weitere rechnergestützte Netzplanungswerkzeuge weiterverarbeitet werden.

Zusätzlich können mit Hilfe des beschriebenen Verfahren auch Werte weiterer Übertragungsparameter wie z.B. Funkfrequenzen bzw. Frequenzbereiche den jeweiligen Zellen Z1...4 der Kommunikationsanordnung KA zugeordnet werden.

Weiterhin kann das erfindungsgemäße Verfahren auch bei einer Netzerweiterung, d.h. bei einem Hinzufügen weiterer Funkzellen bzw. Basisstationen - nicht dargestellt - zu einer bereits bestehenden Kommunikationsanordnung KA eingesetzt werden, wobei die bereits Basisstationen BS1...4 zugeordneten Werte eines Übertragungsparameters - z.B. bereits zugeordnete CDMA-Codes c1...7 - zugeordnet bleiben und nur den neu hinzugefügten Basisstationen mit Hilfe des kombinatorischen Optimierungsalgorithmus jeweils zumindest ein Wert des zumindest einen Übertragungsparameters - z.B. ein CDMA-Code c1...7 bzw. CDMA-Basiscode zugeordnet wird. Bei einer Netzerweiterung wird beispielsweise ein gespeichertes, optimales Ergebnis einer Zuordnung eingelesen, sowie Basisstationen BS1...4, denen bereits zumindest ein Wert des zumindest einen Übertragungsparameters zugeordnet ist, im Rahmen des Verfahrens mit einer Markierung versehen. Eine Markierung kann beispielsweise gemäß einer in FIG 5B angedeuteten Ausgestaltungsvariante durch ein gesetztes Flag - z.B. gesetztes Bit - in einem Markierungs-Datenfeld mdf bzw. in einer Markierungs-Speicherzelle realisiert sein, welche jeweils einem Knoten K1...4 des Nachbarschaftsgraphen G zugeordnet ist. Jedem Knoten K1...4 des Nachbarschaftsgraphen G kann zusätzlich eine weitere Werte-Speicherzelle wdf zur Speicherung des zumindest einen zugeordneten Wertes des zumindest einen Übertragungsparameters - z.B. des zugeordneten CDMA-Codes c1...7 - zugeordnet werden - vgl. FIG 5B. Jedes einem Knoten K1...4 bzw. einer Basisstation BS1...4 zugeordnete Flag in einem Markierungs-Datenfeld mdf zeigt an, ob ein in der entsprechenden Werte-Speicherzelle wdf gespeicherter Wert im Verlauf des Verfahrens verändert werden darf. Beispielsweise werden bei einem Netzaufbau bzw. einer Erstzuordnung von Werten des zumindest einen Übertragungsparameters alle Markierungs-Datenfelder mdf gelöscht und somit jedem Knoten K1...4 bzw. jeder Basisstation BS...4 zumindest ein Wert des zumindest einen Übertragungsparameters zugeordnet. Bei einer Netzerweiterung bzw. bei einem Hinzufügen weiterer Basisstationen zu einer bereits realisierten Kommunikationsanordnung KA werden die bereits zugeordneten Werte des zumindest einen Übertragungsparameters eingelesen bzw. geladen und die Flags in den Markierungs-Datenfeldern mdf entsprechend gesetzt. Durch das erfindungsgemäße Verfahren werden die hinzugefügten Basisstationen wie bei einem Netzaufbau behandelt. Die bereits zugeordnete Werte des zumindest einen Übertragungsparameters bleiben vorteilhaft erhalten, da z.B. bereits an Basisstationen zugeordnete CDMA-Codes c1...7 nur mit erheblichen Zeit- und Kostenaufwand vor Ort änderbar sind.

## Patentansprüche

1. Verfahren zur Zuordnung zumindest eines im Rahmen eines CDMA-Vielfachzugriffsverfahrens nutzbaren CDMA-Codes (c1...7) zu Zellen (Z...4) einer m Zellen aufweisenden Kommunikationsanordnung (KA),
- bei dem n unterschiedliche CDMA-Codes (c1...7) verfügbar sind,
- bei dem benachbarte Zellen (Z1...4) erfaßt werden,
- bei dem jeder Zelle (Z1...4) jeweils zufällig zumindest ein CDMA-Code (c1...7) zugeordnet wird,
- bei dem für jeweils benachbarte Zellen (Z1...4) jeweils ein die gegenseitige übertragungstechnische Beeinflussung der aktuell zugeordneten CDMA-Codes (c1...7) repräsentierender Störwert (kc1_1...kc7_7) ermittelt wird,
- bei dem ein die Summe aller ermittelten Störwerte repräsentierender Gesamtstörwert ermittelt wird,
- bei dem die Anzahl der unterschiedlichen CDMA-Codes (c1...7) und deren Zuordnung zu den jeweiligen Zellen (Z1...4) solange variiert wird, bis ein minimaler Gesamtstörwert erreicht ist.

2. Verfahren nach Anspruch 1,
**dadurch gekennzeichnet,**
- **daß** zusätzlich für jeweils nicht benachbarte Zellen (Z1...4) jeweils ein die gegenseitige übertragungstechnische Beeinflussung der aktuell zugeordneten CDMA-Codes (c1...7) repräsentierender weiterer Störwert (kc1_1...kc7_7) ermittelt wird, und
- **daß** der die Summe aller Störwerte repräsentierende Gesamtstörwert aus einer gewichtbaren Summe aller Störwerte (kc1_1...kc7_7) und der weiteren Störwerte (kc1_1...kc7_7) gebildet wird.

3. Verfahren nach einem der vorherigen Ansprüche,
**dadurch gekennzeichnet,**
**daß** bei Hinzufügen zumindest einer weiteren Zelle zu den m Zellen (Z1...4) der Kommunikationsanordnung (KA) die Zuordnung zumindest eines weiteren CDMA-Codes (c1...7) derart erfolgt,
- **daß** die den m Zellen (Z1...4) bereits zugeordneten CDMA-Codes (c1...7) zugeordnet bleiben, und
- **daß** die Anzahl der insgesamt den m Zellen (Z1...4) und der zumindest einen hinzugefügten Zelle zugeordneten, unterschiedlichen CDMA-Codes (c1...7) und die Zuordnung zumindest eines CDMA-Codes (c1...7) zu der zumindest einen hinzugefügten Zelle solange variiert wird, bis ein minimaler Gesamtstörwert erreicht wird.

4. Verfahren nach einem der vorherigen Ansprüche,
**dadurch gekennzeichnet,**
- **daß** die Anzahl der CDMA-Codes (c1...7) und deren Zuordnung zu den jeweiligen Zellen (Z1...4) mit Hilfe einer iterativen Optimierung variiert wird,
- **daß** die Summe aller Störwerte eine ein gewichtbares Optimierungsziel repräsentierende Funktionskomponente (f3) einer Zielfunktion (E) darstellt,
- **daß** im Rahmen der iterativen Optimierung das gewichtbare Optimierungsziel der Zielfunktion (E) derart optimiert wird, daß die Summe aller Störwerte einen minimalen Gesamtstörwert und die Zielfunktion (E) einen optimalen oder minimalen Funktionswert erreicht.

5. Verfahren nach Anspruch 4,
**dadurch gekennzeichnet,**
- **daß** die Zielfunktion (E) eine weitere ein gewichtbares Optimierungsziel repräsentierende Funktionskomponente (f1) aufweist, durch welche die Anzahl von allen Zellen (Z1...4) aktuell zugeordneten, unterschiedlichen CDMA-Codes (c1...7) erfaßt wird, und/oder
- **daß** die Zielfunktion (E) eine weitere ein gewichtbares Optimierungsziel repräsentierende Funktionskomponente (f2) aufweist, durch welche die Anzahl von jeweils benachbarten Zellen (Z1...4) aktuell zugeordneten, gleichen CDMA-Codes (c1...7) erfaßt wird, und
- **daß** im Rahmen der iterativen Optimierung die gewichtbaren Optimierungsziele derart gewichtet werden und die Zielfunktion (E) derart optimiert wird,
-- **daß** den Zellen (Z1...4) eine minimale Anzahl unterschiedlicher CDMA-Codes (c1...7) zugeordnet werden, und/oder
-- **daß** benachbarte Zellen (Z1...4) nach Möglichkeit keine gleichen CDMA-Codes (c1...7) aufweisen.

6. Verfahren nach einem der vorherigen Ansprüche,
**dadurch gekennzeichnet,**
**daß** zumindest ein CDMA-Code (c1...7) einer in einer Zelle (Z1...4) angeordneten, zentralen Kommunikationseinrichtung (BS1...4) zugeordnet wird.

7. Verfahren nach einem der Ansprüche 1 bis 6,
**dadurch gekennzeichnet,**
**daß** der zumindest eine einer Zelle (Z1...4) zuordenbarer CDMA-Code (c1...7) einen im Rahmen eines CDMA-Vielfachzugriffsverfahren nutzbaren, orthogonalen oder nichtorthogonalen CDMA-Code repräsentiert

8. Verfahren nach einem der vorherigen Ansprüche,
**dadurch gekennzeichnet,**
- **daß** für die Ermittlung der jeweils die gegenseitige übertragungstechnische Beeinflussung der aktuell zugeordneten CDMA-Codes repräsentierenden Störwerte (kc1_1...kc7_7) jeweils die Kreuzkorrelation der aktuell zugeordneten CDMA-Codes ermittelt wird, und
- **daß** der Gesamtstörwert die Summe aller ermittelten Kreuzkorrelationen (kc1_1...kc7_7) repräsentiert.

9. Verfahren nach Anspruch 8,
**dadurch gekennzeichnet,**
- **daß** die Summe aller ermittelten Kreuzkorrelationen (kc1_1...kc7_7) die das gewichtbare Optimierungsziel repräsentierende Funktionskomponente (f3) der Zielfunktion (E) darstellt,
- **daß** im Rahmen der iterativen Optimierung das gewichtbare Optimierungsziel der Zielfunktion (E) derart optimiert wird, daß die Summe aller Kreuzkorrelationen (kc1_1...kc7_7) einen minimalen Gesamtwert erreicht.

10. Verfahren nach einem der Ansprüche 5 bis 9,
**dadurch gekennzeichnet,**
- **daß** die Anzahl der zugeordneten, verschiedenartiger CDMA-Codes (c1...7) die weitere ein gewichtbares Optimierungsziel repräsentierende Funktionskomponente (f1) darstellt, und/oder
- **daß** die Anzahl von jeweils benachbarten, zentralen Kommunikationseinheiten (BS1...4) aktuell zugeordneten, gleichartigen CDMA-Codes (c1...7) die weitere ein gewichtbares Optimierungsziel repräsentierende Funktionskomponente (f2) darstellt,
- **daß** im Rahmen der iterativen Optimierung die gewichtbaren Optimierungsziele der Zielfunktion (E) derart optimiert werden, daß den zentralen Kommunikationseinheiten (BS1...4) eine minimale Anzahl unterschiedlicher CDMA-Codes (c1...7) zugeordnet werden, wobei benachbarte, zentrale Kommunikationseinheiten (BS1...4) nach Möglichkeit keine gleichartigen CDMA-Codes (c1...7) aufweisen.

11. Verfahren nach einem der Ansprüche 4 bis 10,
**dadurch gekennzeichnet,**
**daß** die iterative Optimierung hinsichtlich einer Optimierung des zumindest einen Optimierungszieles der Zielfunktion (E) im Rahmen eines bekannten kombinatorischen Optimierungsverfahrens wie Simulated Annealing oder mit Hilfe neuronaler Netze oder durch genetische Algorithmen erfolgt.

12. Verfahren nach einem der vorherigen Ansprüche,
**dadurch gekennzeichnet,**
- **daß** den Zellen (Z1...4) oder den zentralen Kommunikationseinheiten (BS1...4) orthogonale CDMA-Codes und/oder Pseudo-Random CDMA-Codes (c1...7) zugeordnet werden, und
- **daß** aus den zugeordneten CDMA-Codes (c1...7) weitere Kommunikationseinheit-spezifische CDMA-Codes abgeleitet werden.

13. Verfahren nach einem der Ansprüche 4 bis 12,
**dadurch gekennzeichnet,**
- **daß** bei einem Hinzufügen zumindest einer weiteren Zelle zu der Kommunikationsanordnung (KA) die bereits zugeordneten CDMA-Codes (c1...7) zugeordnet bleiben und
- **daß** die Gewichtungen (k1...3) der Optimierungsziele der Zielfunktion (E) derart gewählt sind,
-- **daß** im Rahmen der iterativen Optimierung den weiteren Zellen nur eine minimale Anzahl der verfügbaren und noch nicht zugeordneten CDMA-Codes (c1...7) zugeordnet wird, wobei die Summe der ermittelten Kreuzkorrelationen (kc1_1...kc7_7) einen minimalen Gesamtwert aufweist.

14. Verfahren nach einem der vorherigen Ansprüche,
**dadurch gekennzeichnet,**
**daß** die Zuordnung des zumindest einen CDMA-Codes (c1...7) programmtechnisch realisiert wird.

15. Verfahren nach einem der vorherigen Ansprüche,
**dadurch gekennzeichnet,**
**daß** die Kommunikationsanordnung (KA) durch ein zellulares, draht- oder leitungsgebundenes oder leitungsloses Kommunikationsnetz oder durch eine Kombination der genannten Kommunikationsnetze realisiert ist.

## Claims

1. Method for allocating at least one CDMA code (c1...7), which can be used in the course of a CDMA multiple access method, to cells (Z...4) in a communications arrangement (KA) having m cells,
- in which n different CDMA codes (c1...7) are available,
- in which adjacent cells (Z1...4) are detected,
- in which each cell (Z1...4) is in each case randomly allocated at least one CDMA code (c1...7),
- in which a disturbance value (kc1_1...kc7_7), which represents the mutual transmission influence of the currently allocated CDMA codes (c1...7), is in each case determined for respectively adjacent cells (Z1...4),
- in which an overall disturbance value which represents the total of all the determined disturbance values is determined,
- in which the number of different CDMA codes (c1...7) and their allocation to the respective cells (Z1...4) are varied until a minimum overall disturbance value is reached.

2. Method according to Claim 1,
**characterized**
- **in that**, in addition, a further disturbance value (kc1_1...kc7_7), which represents the mutual transmission influence of the currently allocated CDMA codes (c1...7), is in each determined for respectively non-adjacent cells (Z1...4), and
- **in that** the overall disturbance value, which represents the total of all the disturbance
- values, is formed from a total, which can be weighted, of all the disturbance values (kc1_1...kc7_7) and the further disturbance values (kc1_1...kc7_7).

3. Method according to one of the preceding claims,
**characterized**
**in that** when at least one further cell is added to the m cells (Z1...4) in the communications arrangement (KA), the allocation of a further CDMA code (c1...7) is carried out in such a way
- that those CDMA codes (c1...7) which have already been allocated to the m cells (Z1...4) remain allocated, and
- that the total number of those different CDMA codes (c1...7) which have been allocated overall to the m cells (Z1...4) and to the at least one cell which is added, and the allocation of at least one CDMA code (c1...7) to the at least one cell which is added, are varied until a minimum overall disturbance value is reached.

4. Method according to one of the preceding claims,
**characterized**
- **in that** the total number of CDMA codes (c1...7) and their allocation to the respective cells (Z1...4) are varied by iterative optimization,
- **in that** the total of all the disturbance values represents a function component (f3) of a required function (E), which function component (f3) represents an optimization aim which can be weighted,
- **in that**, in the course of the iterative optimization process, the optimization aim (which can be weighted) of the required function (E) is optimized in such a way that the total of all the disturbance values reaches a minimum overall disturbance value, and the required function (E) reaches an optimum or minimum function value.

5. Method according to Claim 4,
**characterized**
- **in that** the required function (E) has a further function component (f1) which represents an optimization aim which can be weighted and by means of which the total number of those different CDMA codes (c1...7) which have currently been allocated to all the cells (Z1...4) is detected, and/or
- **in that** the required function (E) has a further function component (f2) which represents an
- optimization aim which can be weighted and by means of which the total number of identical CDMA codes (c1...7) which are currently allocated to respectively adjacent cells (Z1...4) is detected, and
- **in that**, in the course of the iterative optimization process, the optimization aims which can be weighted are weighted in such a manner, and the required function (E) is optimized in such a manner,
-- that the cells (Z1...4) are allocated a minimum total number of different CDMA codes (c1...7), and/or
-- that, if possible, adjacent cells (Z1...4) do not have identical CDMA codes (c1...7).

6. Method according to one of the preceding claims,
**characterized**
**in that** at least one CDMA code (c1...7) is allocated to a central communications device (BS1...4), which is arranged in one cell (Z1...4).

7. Method according to one of Claims 1 to 6,
**characterized in that**
the at least one CDMA code (c1...7) which can be allocated to a cell (Z1...4) represents an orthogonal or non-orthogonal CDMA code which can be used in the course of a CDMA multiple access method.

8. Method according to one of the preceding claims, **characterized**
- **in that** the cross-correlation of the currently allocated CDMA codes is in each case determined in order to determine the respective disturbance values (kc1_1...kc7_7) which represent the mutual transmission influence of the currently allocated CDMA codes, and
- **in that** the overall disturbance value represents the total of all the determined cross-correlations (kc1_1...kc7_7).

9. Method according to Claim 8,
**characterized**
- **in that** the total of all the determined cross-correlations (kc1_1...kc7_7) represents that function component (f3) of the required function (E) which represents the optimization aim which can be weighted, and
- **in that**, in the course of the iterative optimization process, that optimization aim of the required function (E) which can be weighted is optimized in such a way that the total of all the cross-correlations (kc1_1...kc7_7) reaches a minimum overall value.

10. Method according to one of Claims 5 to 9,
**characterized**
- **in that** the number of allocated, different types of CDMA codes (c1...7) represents the further function component (f1) which represents an optimization aim which can be weighted, and/or
- **in that** the number of identical CDMA codes (c1...7) which are currently allocated to respectively adjacent, central communications units (BS1...4) represents the further function component (f2) which represents an optimization aim which can be weighted,
- **in that**, in the course of the iterative optimization process, those optimization aims of the required function (E) which can be weighted are optimized in such a way that a minimum number of different CDMA codes (c1...7) can be allocated to the central communications units (BS1...4), in which case, if possible, adjacent, central communications units (BS1...4) do not have CDMA codes (c1...7) of the same type.

11. Method according to one of Claims 4 to 10,
**characterized**
**in that** the iterative optimization process relating to optimization of the at least one optimization aim of the required function (E) is carried out in the course of a known combinational optimization method such as simulated annealing or using neural networks, or by genetic algorithms.

12. Method according to one of the preceding claims,
**characterized**
- **in that** orthogonal CDMA codes and/or pseudo-random CDMA codes (c1...7) are allocated to the cells (Z1...4) or the central communications units (BS1...4), and
- **in that** further communications-unit-specific CDMA codes are derived from the allocated CDMA codes (c1...7).

13. Method according to one of Claims 4 to 12,
**characterized**
- **in that**, when at least one further cell is added to the communications arrangement (KA), the already allocated CDMA codes (c1...7) remain allocated, and
- **in that** the weightings (k1...3) of the optimization aims of the required function (E) are selected in such a way
-- that in the course of the iterative optimization process the further cells are allocated only a minimum number of the available CDMA codes (c1...7) which have not yet been allocated, with the total of the determined cross-correlations (kc1_1...kc7_7) having a minimum overall value.

14. Method according to one of the preceding claims, **characterized in that**
the allocation of the at least one CDMA code (c1...7) is carried out by software.

15. Method according to one of the preceding claims, **characterized in that**
the communications arrangement (KA) is formed by a cellular, wire-based or cable-based, or wire-free communications network, or by a combination of said communications networks.

## Revendications

1. Procédé pour l'attribution d'au moins un code CDMA (c1...7) utilisable dans le cadre d'un procédé d'accès multiple CDMA à des cellules (Z...4) d'un agencement de communication (KA) présentant m cellules,
- dans lequel n codes CDMA (c1...7) différents sont disponibles,
- dans lequel des cellules voisines (Z1...4) sont définies,
- dans lequel à chaque cellule (Z1...4), au moins un code CDMA (c1...7) est attribué chaque fois de manière aléatoire,
- dans lequel on détermine pour chaque cellule voisine (Z1...4) une valeur de perturbation (kc1_1...kc7_7) respective qui représente l'influence technique mutuelle des codes CDMA (c1...7) effectivement attribués sur la transmission,
- dans lequel une valeur globale de perturbation qui représente la somme de toutes les valeurs de perturbation déterminées est déterminée, et
- dans lequel le nombre des codes CDMA (c1...7) différents et leur attribution à chaque cellule (Z1...4) est modifié jusqu'à ce que l'on obtienne une valeur globale minimale de la perturbation.

2. Procédé selon la revendication 1, **caractérisé en ce qu'**en supplément, pour toutes les cellules (Z1...4) non voisines, on détermine une autre valeur de perturbation (kc1_1...kc7_7) qui représente l'influence technique mutuelle des codes CDMA (c1...7) effectivement attribués sur la transmission, et
**en ce que** la valeur globale des perturbations qui représente la somme de toutes les valeurs de perturbation est formée d'une somme pondérable de toutes les valeurs de perturbation (kc1_1...kc7_7) et des autres valeurs de perturbation (kc1_1...kc7_7).

3. Procédé selon l'une des revendications précédentes, **caractérisé en ce que** lors de l'addition d'au moins une autre cellule aux m cellules (Z1...4) de l'agencement de communication (KA), l'attribution d'au moins un autre code CDMA (c1...7) s'effectue de telle sorte que
- les codes CDMA (c1...7) déjà attribués aux m cellules (Z1...4) restent attribués, et que
- le nombre des codes CDMA (c1...7) différents globalement attribués aux m cellules (Z1...4) et à l'au moins une cellule ajoutée et l'attribution d'au moins un code CDMA (c1...7) à l'au moins une cellule ajoutée sont modifiés jusqu'à ce que l'on obtienne une valeur globale de perturbation qui soit minimale.

4. Procédé selon l'une des revendications précédentes, **caractérisé en ce que**
- le nombre des codes CDMA (c1...7) et leur attribution aux cellules (Z1...4) respectives sont modifiés à l'aide d'une optimisation itérative,
- **en ce que** la somme de toutes les valeurs de perturbation représente une composante fonctionnelle (f3), qui représente un objectif d'optimisation pondérable, d'une fonction cible (E), et
- **en ce que** dans le cadre de l'optimisation itérative, l'objectif d'optimisation pondérable de l'optimisation itérative de la fonction cible (E) est optimisé de telle sorte que la somme de toutes les valeurs de perturbation prenne une valeur globale de perturbation minimale et que la fonction cible (E) prenne une valeur optimale ou minimale.

5. Procédé selon la revendication 4, **caractérisé en ce que**
- la fonction cible (E) présente une autre composante fonctionnelle (f1) qui représente un objectif d'optimisation pondérable et par laquelle le nombre des codes CDMA (c1...7) différent attribué effectivement à toutes les cellules (Z1...4) est représenté, et/ou
- **en ce que** la fonction cible (E) présente une autre composante fonctionnelle (f2) qui représente un objectif d'optimisation pondérable, et par laquelle le nombre des codes CDMA (c1...7) identiques effectivement attribués aux cellules voisines (Z1...4) respectives est représenté, et
- **en ce que** dans le cadre de l'optimisation itérative, les objectifs d'optimisation pondérable sont pondérés et la fonction cible (E) est optimisée, de telle sorte que
- un nombre minimum de codes CDMA (c1...7) différent est attribué aux cellules (Z1...4), et/ou
- des cellules voisines (Z1...4) ne présentent si possible pas le même code CDMA (c1...7).

6. Procédé selon l'une des revendications précédentes, **caractérisé en ce qu'**au moins un code CDMA (c1...7) est attribué à un dispositif central de communication (BS1...4) situé dans une cellule (Z1...4).

7. Procédé selon l'une des revendications 1 à 6, **caractérisé en ce que** le code CDMA (c1...7) qui peut être attribué à au moins une cellule (Z1...4) représente un code CDMA orthogonal ou non orthogonal qui peut être utilisé dans le cadre d'un procédé d'accès multiple CDMA.

8. Procédé selon l'une des revendications précédentes, **caractérisé en ce que**
- pour la détermination des valeurs de perturbation (kc1_1...kc7_7) qui représentent l'influence technique mutuelle des codes CDMA effectivement attribués sur la transmission, on détermine chaque fois la corrélation croisée entre les codes CDMA effectivement attribués, et
- **en ce que** la valeur globale de perturbation représente la somme de toutes les corrélations croisées (kc1_1...kc7_7) calculées.

9. Procédé selon la revendication 8, **caractérisé en ce que**
- la somme de toutes les corrélations croisées (kc1_1...kc7_7) déterminées représente la composante fonctionnelle (f3), qui représente l'objectif d'optimisation pondérable, de la fonction cible (E), et
- **en ce que** dans le cadre de l'optimisation itérative, l'objectif d'optimisation pondérable de la fonction cible (E) est optimisé de telle sorte que la somme de toutes les corrélations croisées (kc1_1...kc7_7) atteigne une valeur globale minimale.

10. Procédé selon l'une des revendications 5 à 9, **caractérisé en ce que**
- le nombre des codes CDMA (c1...7) différents associés représente l'autre composante fonctionnelle (f1) qui représente un objectif d'optimisation pondérable, et/ou
- **en ce que** le nombre des codes CDMA (c1...7) identiques effectivement associés à des unités centrales de communication (BS1...4) chaque fois voisine représente l'autre composante fonctionnelle (f2) qui représente un objectif d'optimisation pondérable, et
- **en ce que** dans le cadre de l'optimisation itérative, les objectifs d'optimisation pondérable de la fonction cible (E) sont optimisés de telle sorte qu'un nombre minimum de codes CDMA (c1...7) différents soit associé aux unités centrales de communication (BS1...4), des unités centrales de communication (BS1...4) voisines ne présentant si possible pas un même code CDMA (c1...7).

11. Procédé selon l'une des revendications 4 à 10, **caractérisé en ce que** l'optimisation itérative utilisée pour l'optimisation de l'au moins un objectif d'optimisation de la fonction cible (E) s'effectue par un procédé d'optimisation combinatoire connu, comme le recuit simulé ("Simulated Annealing") ou à l'aide de réseaux neuraux ou par des algorithmes génétiques.

12. Procédé selon l'une des revendications précédentes, **caractérisé en ce que**
- des codes CDMA orthogonaux et/ou des codes CDMA pseudo-aléatoires (c1...7) sont attribués aux cellules (Z1...4) ou aux unités centrales de communication (BS1...4), et
- **en ce que** d'autres codes CDMA spécifiques aux unités de communication sont dérivés des codes CDMA (c1...7) attribués.

13. Procédé selon l'une des revendications 4 à 12, **caractérisé en ce que**
- dans le cas de l'addition d'au moins une autre cellule à l'agencement de communication (KA), les codes CDMA (c1...7) déjà attribués restent attribués, et
- **en ce que** les pondérations (k1...3) des objectifs d'optimisation de la fonction cible (E) sont sélectionnées de telle sorte que
- dans le cadre de l'optimisation itérative, seul un nombre minimum de codes CDMA (c1...7) non encore attribués et disponibles est attribué aux autres cellules, la somme des corrélations croisées (kc1_1...kc7_7) déterminées présentant une valeur globale minimale.

14. Procédé selon l'une des revendications précédentes, **caractérisé en ce que** l'attribution de l'au moins un code CDMA (c1...7) est réalisée par une technique de programmation.

15. Procédé selon l'une des revendications précédentes, **caractérisé en ce que** l'agencement de communication (KA) est mis en oeuvre sous la forme d'un réseau de communication cellulaire, avec lignes avec fil ou sans fil, ou par une combinaison desdits réseaux de communication.
